# EUROPEAN PATENT SPECIFICATION

(11) **EP 1 514 395 B1**
(45) Date of publication and mention of the grant of the patent: **11.04.2007**
(21) Application number: 03732936.4
(22) Date of filing: 04.06.2003
(51) Int. Cl.: H04L 29/06

(54) **A METHOD AND SYSTEM TO SUBSCRIPTION OF EVENTS USING SIP PROTOCOL**
VERFAHREN UND SYSTEM ZUM TEILNEHMEN AN EREIGNISSEN UNTER VERWENDUNG DES SIP-PROTOKOLLS
PROCEDE ET SYSTEME D'ABONNEMENT A DES EVENEMENTS AU MOYEN DE PROTOCOLES SIP

(30) Priority: 14.06.2002 GB 0213726
(43) Date of publication of application: 16.03.2005
(73) Proprietor: Nokia Corporation, 02150 Espoo (FI)
(72) Inventor: NIEMI, Aki, FIN-00610 Helsinki (FI); COSTA-REQUENA, Jose, FIN-00520 Helsinki (FI); SIVANANDAN, Mohan, Roswell, GA 30075 (US); ISOMAKI, Markus, FIN-02210 Espoo (FI); PESSI, Pekka, Fin-00810 Helsinki (FI); BOURET, Christophe, FIN-00100 Helsinki (FI)
(74) Representative: Williams, David John
(86) International application number: PCT/IB2003/002658
(87) International publication number: WO 2003/107621

(56) References cited:
- WO-A2-01/72055
- ROSENBERG J.: 'A presence package for the session initiation protocol (SIP)', [Online] 31 January 2003, XP002962685 Retrieved from the Internet: <URL:www.ietf.org/internet-drafts/draft-iet f-simple-presence-10.txt>
- ROSENBERG J.: 'A session initiation protocol (SIP) event package for registrations', [Online] 28 October 2002, XP002962686 Retrieved from the Internet: <URL:www.ietf.org/internet-drafts/draft-iet f-sipping-reg-event-00.txt>

## Description

### Field of invention

The present invention relates to a communication system, in particular to subscription of events in a communication system.

### Background to the Invention

A diverse range of communication systems are in use today enabling communication between two or more-entities, such as user equipment and/or other nodes associated with the system.

Communication systems providing wireless communication for user terminals or other nodes are known. An example of a wireless system is a public land mobile network (PLMN). A PLMN is typically a cellular network wherein a base transceiver station (BTS) or similar access entity serves user equipment (UE) such as mobile stations (MS) via a wireless interface. The operation of the apparatus required for the communication is usually controlled by one or more control entities, which themselves may be interconnected. One ormore gateway nodes provide for connecting the PLMN to other networks. Examples of other such networks are another cellular network, a public switched telephone network (PSTN) and packet switched data networks such as an IP (Internet Protocol) based network. The communication between the user equipment and the other elements of the communication system are based on an appropriate communications protocol, which defines the "rules" under which communication is handled in the system.

In the current third generation (3G) Wireless system, there are defined various servers for the handling of different communication services for mobile users. These include servers that provide call state control functions, known as CSCFs. Control functions may also be provided by entities such as a home subscriber server (HSS) and applications by various application servers. The HSS is typically for permanently storing the user's profile and used during authentication. For example, in the Release 5 architecture for 3G, as specified by the 3^{rd} Generation Partnership Project (3GPP), these entities can be found located in the IP Multimedia Subsystem (IMS).

The IMS network may sit at the hub of the 3G architecture, supporting an IP based network that handles both traditional voice telephony and multimedia services. The 3GPP has chosen Session Initiation Protocol (SIP) as a core session signalling protocol for 3G networks. SIP has been developed by the Internet Engineering Task Force (IETF). Those interested can find the 3GPP specification 24.229 describing the IMS network's basic operation from an SIP perspective titled "IP Multimedia Call Control Protocol based on SIP and SDP" at http://www.3gpp.org/ftp/Specs/Latest-drafts/24229-201.zip. SIP is a request/response style protocol, in the sense that for every message sent from a source, there is an associated response from the destination confirming receipt of the sent message.

For example, in a 3G network, when a user first switches on his mobile terminal, he must register his user ID or address with the network before allowing the terminal to fully connect. This is done by sending a SIP 'REGISTER' message from the terminal to the IMS, which includes details of the users address. The IMS receives and processes this information using a serving call state control function (S-CSCF), which in this context is referred to as the "registrar". This registration information may include the status of the user such as user address, location, terminal capability and user availability. The IMS acknowledges the registration by sending a suitable acknowledge message (e.g. 200 OK message) in accordance with SIP. Subsequent registrations also take place (re-REGISTER') whenever the preceding registration has expired, or when there is a change in the status of the user. When a user wishes to set up a session with another user, such as a voice call or sending of a text message, the session negotiation will also be performed under SIP.

Application servers (AS) may supply services via the IMS such as instant messaging, local traffic reports, and conferencing facilities. An AS may reside within the IMS network, or outside of it. Typically the AS is external when the service supported is provided by a third party. For example, an AS providing local traffic reports may need the latest information on the status of any users subscribing to that service. As noted above, status information can be updated using an SIP re-REGISTER message. The AS server requiring this status information therefore subscribes, using an SIP SUBSCRIBE message, to the REGISTER messages sent by the user subscribing to the instant messaging service offered by the AS. The IMS logs these SUBSCRIBE messages, and sends out a NOTIFY message to the AS every time a relevant REGISTER message is received. The AS can then use this information to implement its traffic reporting service. Further information on the SUBSCRIBE/NOTIFY mechanism can be found in the IETF Internet Draft titled "SIP-Specific Event Notification" which can be found at http://www.ietf.org/internet-drafts/draft-ietf-sip-events-05.txt.

One specific example of status information is presence information. Users or application servers subscribing to a presence service can determine the ability and availability of another user to accept a call. For example, in a PSTN arrangement, the concept of presence extends to little more than an indication of being online (ringing) or offline (engaged). However, in systems supporting SIP, presence can assume a variety of indicators such as 'in the office and available for all calls', 'at home and available for private calls only', and 'busy in call' (or at least appear that way). Thus presence information allows a user to ascertain the availability of another user before attempting to make a call. Like other status information as discussed above, it is relayed to the network in a REGISTER message.

There are presently two key elements in implementing a presence service in accordance with SIP: a registrar and a presence server. The registrar receives and processes a!! REGISTER messages on users of the network. The presence server handles subscriptions to presence information relating to a user of the network from elements such as other users or application servers. Due to the overlapping nature of the functionality offered by both elements, the registrar and presence server typically share a proprietary location resource such as a LDAP (Lightweight Directory Access Protocol) directory or a location server to which both elements interface. Alternatively, the registrar and the presence server functionality can be run in a shared process, both having access to registration updates. The effect of these proprietary solutions is the same: co-location of the registrar and presence server. In the IMS arrangement discussed above, the registrar and presence server would be co-located in a S-CSCF, As the functionality offered by the presence server is considerable, there is a resulting increase in the load of the shared resource, which will have to handle both registrations and a large number of requests for presence information.

WO-A-09/72055 describes a presence registration and routing node which receives a message indicative of a telephony-related action performed by a user. In response to the message, the presence registration and routing node sends a message to a presence service for updating presence information regarding the user in a presence server database.

The inventors have discovered that there are desirable benefits of separating the registrar and presence server functionality and have them operate independently. They have developed a solution to enable this separation that does not use proprietary interfaces, resulting in better integration with overall network in which they operate.

It shall be appreciated that although the above discussed problems relate to subscriptions to SIP events in IP based third generation (3G) communication systems, similar disadvantages may associate with other systems as well and thus the description is not limited to these examples.

### Summary of the invention

Embodiments of the present invention aim to overcome one or several of the above problems.

According to one aspect of the present invention, there is provided a method in a communication system, the system comprising a first entity maintaining registration information from a plurality of users and characterised by a second entity maintaining information associated with said plurality of users, wherein said second entity information is dependent on the registration information. The method comprises sending a subscribe message for an event from the second entity to the first entity, wherein the event is a change in the registration information of at least one of the plurality of users at the first entity; receiving at the first entity a register message from at least one user, said message changing the registration information of said at least one user; sending a notification from the first entity to the second entity in response to the register message, wherein the notification includes information associated with said at least one user.

Preferably an event package is defined, the event package being associated with said event.

Preferably the first entity is a registrar, and the second entity is a presence server. The change in registration information may relate to presence information.

The system may operate in accordance with a session initiation protocol (SIP), and wherein the subscribe message may comprise a SIP SUBSCRIBE message, and the notification may comprise a SIP NOTIFY message.

In preferred embodiments a third entity sends a subscribe message to the second entity for information associated with said at least one user.

The second entity may send a notification to the third entity in response to the notification received at the second entity, wherein said sent notification includes information associated with said at least one user. The third entity may be an application server.

According to a second aspect of the present invention, there is provided a communication system comprising a first entity for maintaining registration information from a plurality of users and characterised by a second entity for maintaining information associated with said plurality of users, wherein said second entity information is dependent on the registration information; said second entity operable to send a subscribe message for an event to the first entity and said first entity operable to receive a register message from at least one user, said register message changing the registration information of said at least one user, wherein the event is associated with a change in the registration information of at least one of the plurality of users at the first entity; and said first entity operable to send a notification from the first entity to the second entity in response to the register message, wherein the notification includes information associated with said at least one user.

According to a third aspect of the present invention, there is provided a first entity for a communication system comprising means for maintaining registration information from a plurality of users; means for receiving a register message from at least one user, said register message changing the registration information of said at least one user; characterised by means for receiving a subscribe message for an event from a second entity, wherein the event is associated with a change in the registration information of at least one of the plurality of users at the network element; and means for sending a notification to the second entity in response to the register message, wherein the notification includes information associated with said at least one user.

According to a fourth aspect of the present invention, there is provided a second entity for a communication system comprising means for maintaining information associated with a plurality of users; characterised by means for sending a subscribe message for an event to a first entity, wherein the event is associated with a change in the registration information of at least one of the plurality of users at the first entity; and means for receiving a notification from the first entity, wherein the notification includes information associated with said at least one user; and wherein said information is dependent on registration information maintained at a first entity.

### Brief Description of Drawings

Embodiments of the present invention will now be described by way of example with reference to the accompanying drawings, in which:
Figure 1 illustrates a communication system wherein the present invention can be applied;
Figure 2 illustrates the arrangement of the registrar and presence server in accordance with the prior art.
Figure 3 illustrates one embodiment of the present invention.
Figure 4 illustrates the message flow of one embodiment of the present invention.

### Detailed description of embodiments

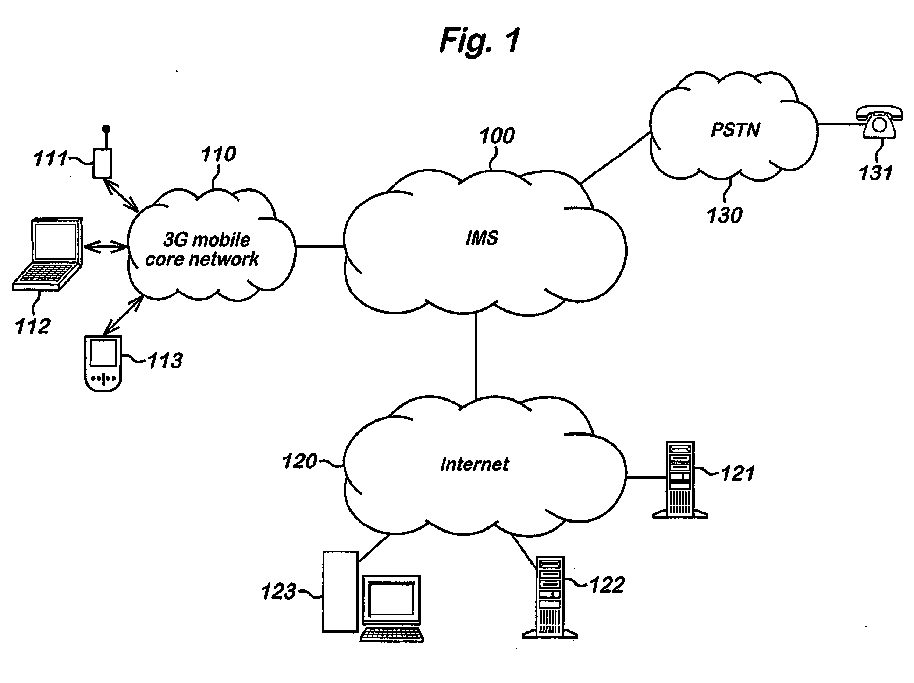

Reference will now first be made to the Figure 1, which illustrates a typical 3^{rd} Generation (3G) Wireless telecommunications system operating under the Universal Mobile Telecommunications System (UMTS). At the hub of this system is the IP Multimedia Subsystem (IMS) 100 network, which routes calls between two or more users of the network and provides other network functions. Examples of users are mobile terminal 111, laptop 112, personal desktop assistant (PDA) 113, Public Switched Telephone Network (PSTN) telephone 131, computer terminal 123, and application server 121, and application server 122. The IMS uses an IP based network to handle these calls, which may include both voice calls and multimedia calls.

The IMS network effectively acts as a gateway in a 3G system between the users 111, 112, 113, and other networks such as a PSTN 130 and external IP based network 120. Signalling between the mobile terminal and other users of the IMS network, and within the IMS network, is done under the Session Initiation Protocol (SIP). All references to messages that follow are SIP messages unless otherwise stated, and will be shown in capitals.

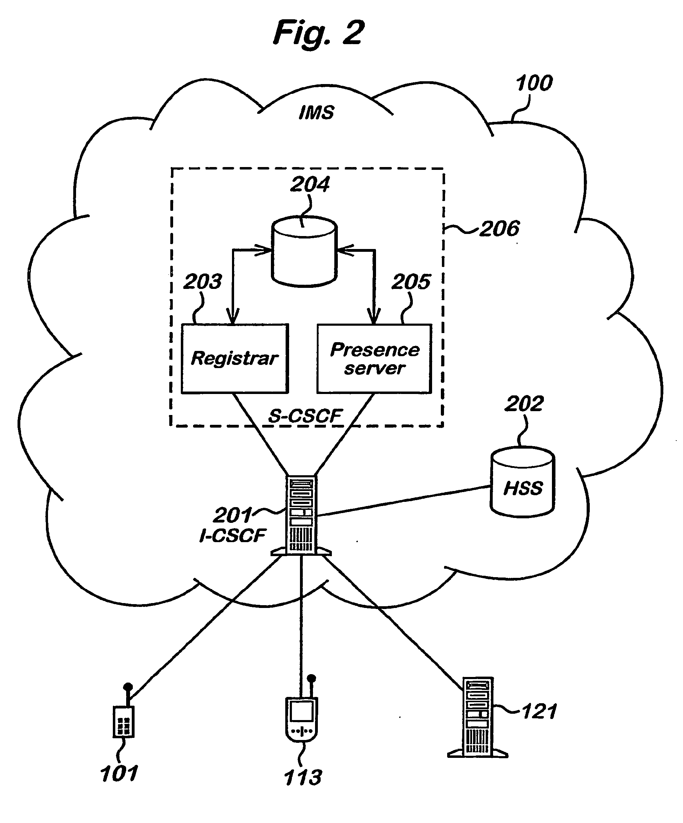

Figure 2 shows a schematic of the IMS network 100 of the prior art. The IMS includes various elements including several Call State Control Functions (CSCF). A CSCF is equivalent to a SIP server in the IETF architecture.

The Interrogating CSCF (I-CSCF) 201 is the basic IMS node used for terminating calls in the IMS network, functioning at the edge of the network. Here, it is shown communicating with the external nodes of a mobile terminal 101, a PDA 113, and an application server (AS) 121. It should be appreciated that the connections between the mobile terminal, the PDA and the application server to the I-CSCF may not be direct, but via a suitable intermediate network such as the mobile core network 110 for the mobile terminal, and the Internet 120 for the application server, as shown in Figure 1.

The HSS 202 is a centralised user database that interfaces with both the I-CSCF and the S-CSCF, storing information on all users of the IMS. The I-CSCF uses the HSS to perform functions such as authorising of new users and retrieving routing information on the S-CSCF for forwarding messages from external elements to the S-CSCF.

The S-CSCF 206 is the IMS node responsible for invoking services related to IMS users. In this example, the S-CSCF also performs registrar functionality 203 for IMS users, processing user registrations, and also provides presence server functionality 205. As both these elements, 203 and 205, have overlapping functionality, in that they both require information received from users in REGISTER messages, they also share a common resource 204. Here the common resource is shown to be a LDAP directory, but could also be a location server. Alternatively the registrar and presence server functionality are run as a shared process both having access to registration updates.

The reception of a REGISTER message can be classified as an event. Events can be any change of state and associates with an entity, such as a user or another node, in the communication system. Thus an element, such as an application server can subscribe specifically to REGISTER messages relating to a user, or other events such as reception of INVITEs. Further examples of events include presence information of a user and buddylists, which are effectively collections of users that a subscriber is interested in learning the presence information of. It is therefore the S-CSCF that detects the specific events subscribed to by a user, and sends out an appropriate NOTIFY messages in response.

However, to subscribe to an event, an event package must be defined, which sets out the properties of the event In the case of the event presence, a presence package is used for subscribing to the presence information of any user. The semantics of the presence package means that any user can send a subscription message for presence information to the presence server, but if there is no such presence package defined, the presence server would not be able to recognise to what event the user was trying to subscribe to. Therefore, the presence package needs to be defined at the presence server, which can then receive and recognise that the subscription message for the associated event for changes in presence information. The presence server creates a state linked to the presence information, and when any change in the presence information occurs, it will trigger a response or notification.

The presence server interfaces with the shared resource 204, which stores the presence information. The registrar 203 maintains this information, by updating it with information received in REGISTER messages sent by users performing registrations.

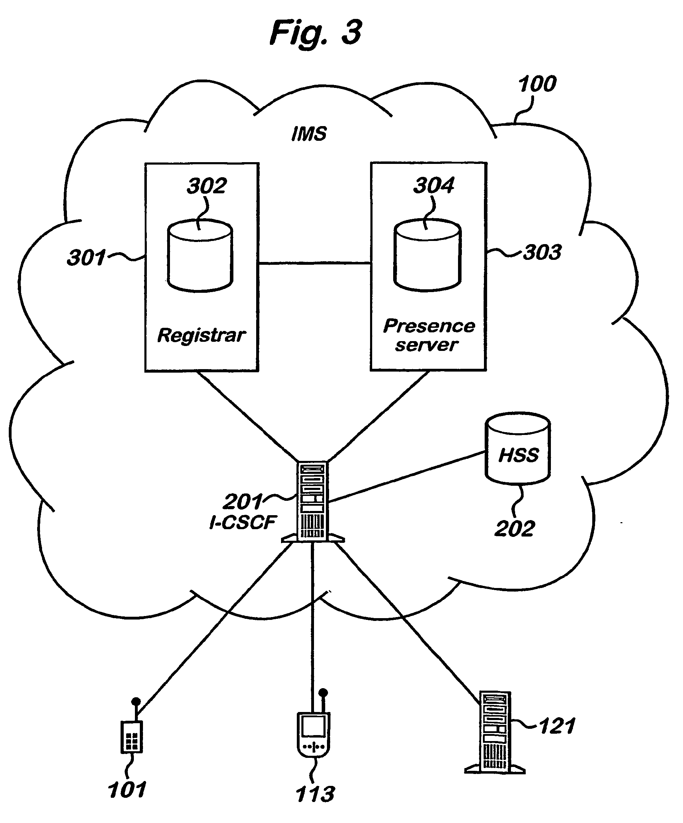

Reference will now be made to Figure 3, which shows a detailed schematic of the IMS network 100 in an embodiment of the present invention. There is an I-CSCF 201, an HSS 202, a registrar 301, and a presence server 302. The I-CSCF is shown communicating with the external nodes of a mobile terminal 101, a PDA 113, and an application server 121. The registrar includes suitable storage means 302 for storing registration. Likewise, the presence server has its own storage means 304 for storing presence information. The presence server shown is one specific example of an application server. Other types of application server include: messaging servers, which handle the sending and receiving of messages between users; content servers, which serve general information to users; and group servers, which maintain information on groups of users that can be accessed by other applications such as the messaging server for group delivery lists.

In this embodiment of the present invention, it is only the registrar that handles registrations from users such as mobile terminal 101, and only the presence server that handles presence queries from elements such as application server 121. Communication between the registrar and the presence server is performed by way of SIP messages.

A new SIP event package is defined, which is implemented by registrars and used by the presence server. The new event package is defined as the aggregate of all the REGISTER messages that change the registration details of any user received at a registrar. For the sake of simplicity, this event package shall be referred to as "registrations" package, which defines the event ''registrations". This "registrations" package is used by the presence server in subscribing to the registrar for changes in the registration status of any user. The registrar creates a state, which triggers a notification back to the presence server whenever a change occurs in the registration status, In effect, the "registration" covers all REGISTER messages sent by any user received by the registrar where a subscription to "registrations" has been previously received by the registrar to the event "registrations". The "registration" event therefore covers all users in a registrar's domain with a single event. The domain can be thought of as a group of users handled by a given registrar.

The presence server can then use the SUBSCRIBE/NOTIFY mechanism, and SUBSCRIBE to "registrations" at the registrar. Whenever the "registrations" event occurs, the registrar sends a NOTIFY message with the user's identity and registration status to the presence server.

The result is that the presence server now keeps a record 304 of registration information that is separate from the one used by the registrar 302. The presence server can therefore provide presence information to other elements such as application server 121 independently of the registrar, without needing to utilise any shared resource.

Furthermore, the only link between the registrar and presence server is through SIP messages and the using the newly defined event, and not a proprietary arrangement as in the prior art.

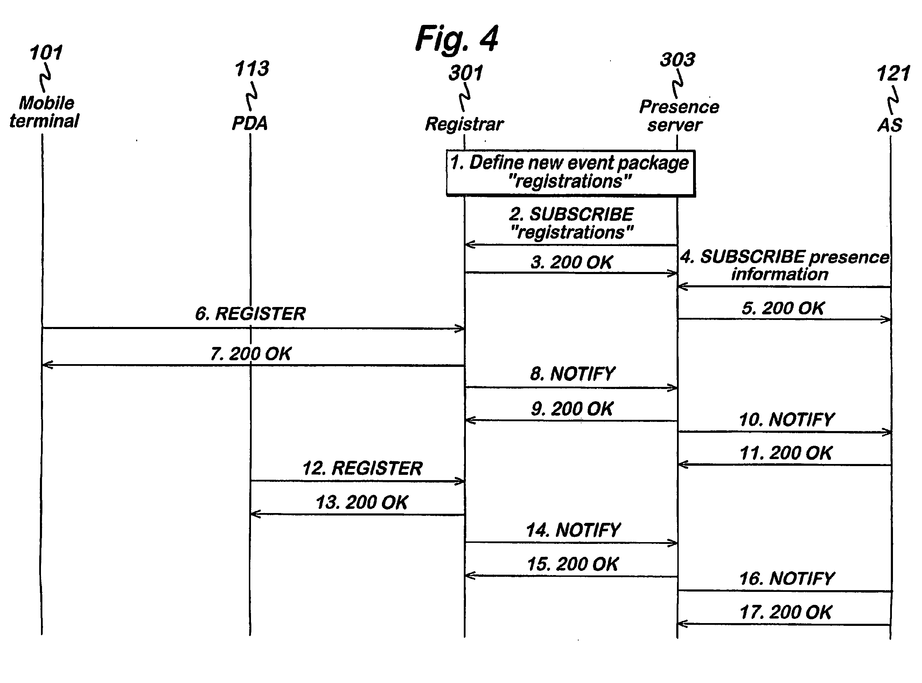

The function of the elements in Figure 3 in one embodiment of the present invention will now be described in more detail with reference to the message flow diagram of Figure 4.

Figure 4 describes the following process:
1. Define new event package for the event "registrations" to be implemented by registrar and used by presence server.
2. The presence server 303 sends a 'SUBSCRIBE to "registrations" event' message to the registrar 301.
3. The registrar acknowledges the SUBSCRIBE message with a '200 OK' message.
4. Application server (AS) 121 sends a 'SUBSCRIBE to presence information for mobile terminal 101 and PDA 113' message to the presence server.
5. The presence server acknowledges the SUBSCRIBE message from the AS with a '200 OK' message.
6. Mobile terminal 101 sends a REGISTER message to the registrar.
7. The registrar acknowledges receipt of the REGISTER message with a '200 OK' message, and updates the registration details at the registrar 302.
8. The REGISTER message sent by mobile terminal 101 satisfies the event "registrations" to which the presence server has subscribed. The registrar therefore sends a NOTIFY message to the presence server which includes user and registration status details of the mobile terminal. These details are maintained at the presence server 304.
9. The presence server acknowledges the NOTIFY message with a '200 OK' message.
10. As the presence information relating to mobile terminal 101 has been subscribed to by AS 121, which has now changed, the presence server sends a NOTIFY message to the AS with details of the change in presence information.
11. The AS acknowledges the NOTIFY message with a '200 OK' message.
12. PDA 113 sends a REGISTER message to the registrar.
13. The registrar acknowledges receipt of the REGISTER message with a '200 OK' message, and updates the registration details at the registrar 302.
14. The registrar also sends the presence server a NOTIFY for this REGISTER message as the "registration" event subscribed to in step 2 by the presence server covers all REGISTER messages handled by the registrar. The NOTIFY message includes user and registration status details of the PDA. These details are maintained at the presence server 304.
15. The presence server acknowledges the NOTIFY message with a '200 OK' message.
16. As the presence information relating to PDA has been subscribed to by AS 121, which has now changed, the presence server sends a NOTIFY message to the AS with details of the change in presence information.
17. The AS acknowledges the NOTIFY message with a '200 OK' message.

It should be appreciated that although embodiments of the present invention have been described in the context of 3G using SIP, other suitable systems and interface protocols could be used.

It should also noted herein that while the above describes exemplifying embodiments of the invention, there are several variations and modifications which may be made to the disclosed solution without departing from the scope of the present invention as defined in the appended claims.

## Claims

1. A method for use in a communication system, comprising a first entity maintaining registration information from a plurality of users (101, 113, 121) and **characterised by** a second entity maintaining information associated with said plurality of users (101, 113, 121), wherein said second entity information is dependent on the registration information, and said method comprising the steps of:
sending a subscribe message for an event from the second entity to the first entity, wherein the event is a change in the registration information of at least one of the plurality of users (101, 113, 121) at the first entity;
receiving at the first entity a register message from at least one user (101, 113, 121), said message changing the registration information of said at least one user (101, 113, 121);
sending a notification from the first entity to the second entity in response to the register message, wherein the notification includes information associated with said at least one user (101, 113, 121).

2. The method as claimed in claim 1, where an event package is defined, the event package being associated with said event

3. The method as claimed in claim 2, wherein the first entity is a registrar (301).

4. The method as claimed in claim 3, wherein the change in registration information relates to presence information.

5. The method as claimed in claim 4, wherein the second entity is a presence server (303).

6. The method as claimed in any of the preceding claims, wherein the system operates in accordance with a session initiation protocol (SIP).

7. The method as claimed in claim 6, wherein the subscribe message comprises a SIP SUBSCRIBE message, and the notification comprises a SIP NOTIFY message.

8. The method as claimed in any preceding claim, wherein a third entity sends a subscribe message to the second entity for information associated with said at least one user (101, 113, 121).

9. The method as claimed in claim 8, wherein the second entity sends a notification to the third entity in response to the notification received at the second entity, wherein said sent notification includes information associated with said at least one user (101, 113, 121).

10. The method as claimed in claim 8 or 9, wherein the third entity is an application server (121).

11. A communication system comprising:
a first entity for maintaining registration information from a plurality of users (101, 113, 121) and characterise by a second entity for maintaining information associated with said plurality of users (101, 113, 121), wherein said second entity information is dependent on the registration information;
said second entity operable to send a subscribe message for an event to the first entity and said first entity operable to receive a register message from at least one user (101, 113, 121), said register message changing the registration information of said at least one user (101, 113, 121), wherein the event is associated with a change in the registration information of at least one of the plurality of users (101, 113, 121) at the first entity; and
said first entity operable to send a notification from the first entity to the second entity in response to the register message, wherein the notification includes information associated with said at least one user (101, 113, 121).

12. A communication system as claimed in claim 11, further comprising an event package associated with said event.

13. A communication system as claimed in claim 12, wherein the first entity is a registrar (301).

14. A communication system as claimed in claim 13, wherein the change in registration information relates to presence information.

15. A communication system as claimed in claim 14, wherein the second entity is a presence server (303).

16. A communication system as claimed in claims 11 to 15, wherein the system operates in accordance with a session initiation protocol (SIP).

17. A first entity for a communication system comprising:
means for maintaining registration information from a plurality of users (101,113,121);
means for receiving a register message from at least one user (101, 113, 121), said register message changing the registration information of said at least one user (101, 113, 121);
**characterised by**:means for receiving a subscribe message for an event from a second entity, wherein the event is associated with a change in the registration information of at least one of the plurality of users (101, 113, 121) at the first entity; and
means for sending a notification to the second entity in response to the register message, wherein the notification includes information associated with said at least one user (101, 113, 121).

18. A second entity for a communication system comprising:
means for maintaining information associated with a plurality of users (101,113,121);
**characterised by**:
means for sending a subscribe message for an event to a first entity, wherein the event is associated with a change in the registration information of at least one of the plurality of users (101, 113, 121) at the first entity; and
means for receiving a notification from the first entity, wherein the notification includes information associated with said at least one user (101, 113, 121), and;
wherein said information is dependent on registration information maintained at the first entity.

19. The first entity as claimed in claim 17, where an event package is defined, the event package being associated with said event

20. The first entity as claimed in claim 19, wherein the first entity is a registrar.

21. The first entity as claimed in claim 20, wherein the change in registration information relates to presence information.

22. The first entity as claimed in claim 21, wherein the second entity is a presence server.

23. The first entity as claimed in claim 17, wherein the system operates in accordance with a session initiation protocol (SIP).

24. The first entity as claimed in claim 23, wherein the subscribe message comprises a SIP SUBSCRIBE message, and the notification comprises a SIP NOTIFY message.

25. The second entity as claimed in claim 18, where an event package is defined, the event package being associated with said event.

26. The second entity as claimed in claim 25, wherein the first entity is a registrar.

27. The second entity as claimed in claim 26, wherein the change in registration information relates to presence information.

28. The second entity as claimed in claim 27, wherein the second entity is a presence server.

29. The second entity as claimed in claim 18, wherein the system operates in accordance with a session initiation protocol (SIP).

30. The second entity as claimed in claim 29, wherein the subscribe message comprises a SIP SUBSCRIBE message, and the notification comprises a SIP NOTIFY message.

31. The second entity as claimed in claim 18, wherein a third entity sends a subscribe message to the second entity for information associated with said at least one user.

32. The second entity as claimed in claim 31, wherein the second entity sends a notification to the third entity in response to the notification received at the second entity, wherein said sent notification includes information associated with said at least one user.

33. The second entity as claimed in claim 31, wherein the third entity is an application server.

## Patentansprüche

1. Verfahren zur Verwendung in einem Kommunikationssystem mit einer ersten Einheit, die Registrierungsinformationen einer Mehrzahl von Anwendern (101, 113, 121) verwaltet und **gekennzeichnet ist durch** eine zweite Einheit, die Informationen, die mit der Mehrzahl von Anwendern (101, 113, 121) in Zusammenhang stehen, verwaltet, wobei die Informationen der zweiten Einheit von den Registrierungsinformationen abhängig sind und wobei das Verfahren die Schritte umfasst:
Senden einer Teilnahmenachricht für ein Ereignis von der zweiten Einheit an die erste Einheit, wobei das Ereignis eine Veränderung in den Registrierungsinformationen von wenigstens einem der Mehrzahl von Anwendern (101, 113, 121) an der ersten Einheit ist;
Empfangen an der ersten Einheit einer Registriernachricht von wenigstens einem Anwender (101, 113, 121), wobei die Nachricht die Registrierungsinformationen des wenigstens einen Anwenders (101, 113, 121) verändert :
Senden einer Benachrichtigung von der ersten Einheit an die zweite Einheit als Antwort auf die Registriernachricht, wobei die Benachrichtigung Informationen, die mit dem wenigstens einen Anwender (101, 113, 121) im Zusammenhang stehen, enthält.

2. Verfahren gemäß Anspruch 1, wobei ein Ereignispaket definiert ist, wobei das Ereignispaket mit dem Ereignis im Zusammenhang steht.

3. Verfahren gemäß Anspruch 2, wobei die erste Einheit ein Registrator (301) ist.

4. Verfahren gemäß Anspruch 3, wobei die Veränderung in Registrierungsinformationen mit Anwesenheitsinformationen im Zusammenhang steht.

5. Verfahren gemäß Anspruch 4, wobei die zweite Einheit ein Anwesenheits-Server (303) ist.

6. Verfahren gemäß einem der vorhergehenden Ansprüche, wobei das System gemäß einem Sitzungsinitüerungsprotokoll (SIP) arbeitet.

7. Verfahren gemäß Anspruch 6, wobei die Teilnahmenachricht eine "SIP SUBSCRIBE"-Nachricht umfasst und die Benachrichtigung eine "SIP NOTIFY"-Nachricht umfasst.

8. Verfahren gemäß einem der vorhergehenden Ansprüche, wobei eine dritte Einheit eine Teilnahmenachricht an die zweite Einheit für mit dem wenigstens einen Anwender (101, 113, 121) im Zusammenhang stehenden Informationen sendet.

9. Verfahren nach Anspruch 8, wobei die zweite Einheit eine Benachrichtigung an die dritte Einheit als Antwort auf die Benachrichtigung, die an der zweiten Einheit empfangen wurde, sendet, wobei die gesendete Benachrichtigung Informationen enthält, die mit dem wenigstens einen Anwender (101, 113, 121) in Zusammenhang stehen.

10. Verfahren nach Anspruch 8 oder 9, wobei die dritte Einheit ein Anwendungs-Server (121) ist.

11. Kommunikationssystem mit:
einer ersten Einheit zum Verwalten von Registrierungsinformationen einer Mehrzahl von Anwendern (101, 113, 121) und **gekennzeichnet durch** eine zweite Einheit zum Verwalten von Informationen, die mit der Mehrzahl von Anwendern (101, 113, 121) in Zusammenhang stehen, wobei die Informationen der zweiten Einheit abhängig sind von den Registrierungsinformationen;
wobei die zweite Einheit betreibbar ist, eine Teilnahmenachricht für ein Ereignis an die erste Einheit zu senden, und die zweite Einheit betreibbar ist, eine Registriernachricht von wenigstens einem Anwender (101, 113, 121) zu empfangen, wobei die Registriernachricht die Registrierungsinformationen von dem wenigstens einen Anwender (101, 113, 121) ändert, wobei das Ereignis mit einer Änderung in den Registrierungsinformationen von wenigstens einem der Mehrzahl von Anwendern (101, 113, 121) an der ersten Einheit in Zusammenhang steht; und
wobei die erste Einheit betreibbar ist, eine Benachrichtigung von der ersten Einheit an die zweite Einheit als Antwort auf die Registriernachricht zu senden, wobei die Benachrichtigung Informationen enthält, die mit wenigstens einem Anwender (101, 113, 121) in Zusammenhang stehen.

12. Kommunikationssystem nach Anspruch 11, weiter umfassend ein Ereignispaket, das mit dem Ereignis in Zusammenhang steht.

13. Kommunikationssystem nach Anspruch 12, wobei die erste Einheit ein Registrator (301) ist.

14. Kommunikationssystem nach Anspruch 13, wobei die Änderung in Registrierungsinformationen Anwesenheitsinformationen betrifft.

15. Kommunikationssystem nach Anspruch 14, wobei die zweite Einheit ein Anwesenheits-Server (303) ist.

16. Kommunikationssystem nach einem der Ansprüche 11 bis 15, wobei das System gemäß einem Sitzungsinitiierungsprotokoll (SIP) arbeitet.

17. Eine erste Einheit für ein Kommunikationssystem mit:
Mitteln zum Verwalten von Registrierungsinformationen einer Mehrzahl von Anwendern (101, 113, 121);
Mitteln zum Empfangen einer Registriernachricht von wenigstens einem Anwender (101, 113, 121), wobei die Registriernachricht die Registrierungsinformationen des wenigstens einen Anwender (101, 113, 121) ändert;
**gekennzeichnet durch**:
Mitteln zum Empfangen einer Teilnahmenachricht für ein Ereignis von einer zweiten Einheit, wobei das Ereignis mit einer Änderung in den Registrierungsinformationen wenigstens eines der Mehrzahl von Anwendern (101, 113, 121) an der ersten Einheit in Zusammenhang steht; und
Mitteln zum Senden einer Benachrichtigung an die zweite Einheit als Antwort auf die Registriernachricht, wobei die Benachrichtigung Informationen enthält, die mit dem wenigstens einem Anwender (101, 113, 121) in Zusammenhang stehen.

18. Eine zweite Einheit für ein Kommunikationssystem mit:
Mitteln zum Verwalten von Informationen, die mit einer Mehrzahl von Anwendern (101, 113, 121) in Zusammenhang stehen;
**gekennzeichnet durch**
Mitteln zum Senden einer Teilnahmenachricht für ein Ereignis an eine erste Einheit, wobei das Ereignis mit einer Änderung in den Registrierungsinformationen wenigstens eines der Mehrzahl von Anwendern (101, 113, 121) an der ersten Einheit in Zusammenhang steht; und Mitteln zum Empfangen einer Benachrichtigung von ersten Einheit,
wobei die Benachrichtigung Informationen enthält, die mit dem wenigstens einen Anwender (101, 113, 121) in Zusammenhang stehen, und
wobei die Informationen von Registrierungsinformationen, die an der ersten Einheit verwaltet werden, abhängig sind.

19. Verfahren gemäß Anspruch 17, wobei ein Ereignispaket definiert ist, wobei das Ereignispaket mit dem Ereignis im Zusammenhang steht.

20. Verfahren gemäß Anspruch 19, wobei die erste Einheit ein Registrator ist.

21. Verfahren gemäß Anspruch 20, wobei die Veränderung in Registrierungsinformationen mit Anwesenheitsinformationen im Zusammenhang steht.

22. Verfahren gemäß Anspruch 21, wobei die zweite Einheit ein Anwesenheits-Server ist.

23. Verfahren gemäß Anspruch 17, wobei das System gemäß einem Sitzungsinitiierungsprotokoll (SIP) arbeitet.

24. Verfahren gemäß Anspruch 23, wobei die Teilnahmenachricht eine "SIP SUBSCRIBE"-Nachricht umfasst und die Benachrichtigung eine "SIP NOTIFY"-Nachricht umfasst.

25. Verfahren gemäß Anspruch 18, wobei ein Ereignispaket definiert ist, wobei das Ereignispaket mit dem Ereignis im Zusammenhang steht.

26. Verfahren gemäß Anspruch 25, wobei die erste Einheit ein Registrator ist.

27. Verfahren gemäß Anspruch 26, wobei die Veränderung in Registrierungsinformationen mit Anwesenheitsinformationen im Zusammenhang steht.

28. Verfahren gemäß Anspruch 27, wobei die zweite Einheit ein Anwesenheits-Server ist.

29. Verfahren gemäß Anspruch 18, wobei das System gemäß einem Sitzungsinitiierungsprotokoll (SIP) arbeitet.

30. Verfahren gemäß Anspruch 29, wobei die Teilnahmenachricht eine "SIP SUBSCRIBE"-Nachricht umfasst und die Benachrichtigung eine "SIP NOTIFY"-Nachricht umfasst.

31. Verfahren gemäß Anspruch 18, wobei eine dritte Einheit eine Teilnahmenachricht an die zweite Einheit für mit dem wenigstens einen Anwender im Zusammenhang stehenden Informationen sendet.

32. Verfahren nach Anspruch 31, wobei die zweite Einheit eine Benachrichtigung an die dritte Einheit als Antwort auf die Benachrichtigung, die an der zweiten Einheit empfangen wurde, sendet, wobei die gesendete Benachrichtigung Informationen enthält, die mit dem wenigstens einen Anwender in Zusammenhang stehen.

33. Verfahren nach Anspruch 31, wobei die dritte Einheit ein Anwendungs-Server ist.

## Revendications

1. Procédé destiné à une utilisation dans un système de communication comprenant une première entité maintenant des informations d'enregistrement depuis une pluralité d'utilisateurs (101, 113, 121) et **caractérisé par** une seconde entité maintenant des informations associées à ladite pluralité d'utilisateurs (101, 113, 121), dans lequel lesdites informations de la seconde entité sont dépendantes des informations d'enregistrement, et ledit procédé comprenant les étapes consistant à :
envoyer un message d'abonnement à un évènement depuis la seconde entité vers la première entité, où l'évènement est un changement dans les informations d'enregistrement d'au moins un de la pluralité d'utilisateurs (101, 113, 121) au niveau de la première entité ;
recevoir, au niveau de la première entité, un message d'enregistrement depuis au moins un utilisateur (101, 113, 121), ledit message changeant les informations d'enregistrement dudit au moins un utilisateur (101, 113, 121) ;
envoyer une notification depuis la première entité à la seconde entité en réponse au message d'enregistrement, où la notification comprend des informations associées audit au moins un utilisateur (101, 113, 121).

2. Procédé selon la revendication 1, dans lequel un ensemble d'évènement est défini, l'ensemble d'évènement étant associé audit évènement.

3. Procédé selon la revendication 2, dans lequel la première entité est un gestionnaire de noms de domaines Internet (301).

4. Procédé selon la revendication 3, dans lequel le changement des informations d'enregistrement concerne des informations de présence.

5. Procédé selon la revendication 4, dans lequel la seconde entité est un serveur de présence (303).

6. Procédé selon l'une quelconque des revendications précédentes, dans lequel le système opère en accord avec un protocole d'initiation de session (SIP).

7. Procédé selon la revendication 6, dans lequel le message d'abonnement comprend un message SIP SUBSCRIBE, et la notification comprend un message SIP NOTIFY.

8. Procédé selon l'une quelconque des revendications précédentes, dans lequel une troisième entité envoie un message d'abonnement à la seconde entité pour des informations associées à au moins un utilisateur (101, 113, 121).

9. Procédé selon la revendication 8, dans lequel la seconde entité envoie une notification à la troisième entité en réponse à la notification reçue au niveau de la seconde entité, où ladite notification envoyée comprend des informations associées audit au moins un utilisateur (101, 113, 121).

10. Procédé selon la revendication 8 ou 9, dans lequel la troisième entité est un serveur d'application (121).

11. Système de communication comprenant :
une première entité pour maintenir des informations d'enregistrement depuis une pluralité d'utilisateurs (101, 113, 121) et **caractérisé par** une seconde entité pour maintenir des informations associées à ladite pluralité d'utilisateurs (101, 113, 121), dans lequel lesdites informations de la seconde entité sont dépendantes des informations d'enregistrement ;
ladite seconde entité pouvant être activée pour envoyer un message d'abonnement à un évènement à la première entité et ladite première entité pouvant être activée pour recevoir un message d'enregistrement depuis au moins un utilisateur (101, 113, 121), ledit message d'enregistrement changeant les informations d'enregistrement dudit au moins un utilisateur (101, 113, 121), où l'évènement est associé à un changement dans les informations d'enregistrement d'au moins un de la pluralité d'utilisateurs (101, 113, 121) au niveau de la première entité ; et
ladite première entité pouvant être activée pour envoyer une notification depuis la première entité à la seconde entité en réponse au message d'enregistrement, où la notification comprend des informations associées audit au moins un utilisateur (101, 113, 121).

12. Système de communication selon la revendication 11, comprenant en outre un forfait d'évènement associé audit évènement.

13. Système de communication selon la revendication 12, dans lequel la première entité est un gestionnaire de noms de domaines Internet (301).

14. Système de communication selon la revendication 13, dans lequel le changement des informations d'enregistrement concerne des informations de présence.

15. Système de communication selon la revendication 14, dans lequel la seconde entité est un serveur de présence (303).

16. Système de communication selon les revendications 11 à 15, dans lequel le système opère en accord avec un protocole d'initiation de session (SIP).

17. Première entité pour un système de communication comprenant :
des moyens pour maintenir des informations d'enregistrement depuis une pluralité d'utilisateurs (101, 113, 121) ;
des moyens pour recevoir un message d'enregistrement depuis au moins un utilisateur (101, 113, 11), ledit message d'enregistrement changeant les informations d'enregistrement dudit au moins un utilisateur (101, 113, 121) ;
**caractérisée par** :
des moyens pour recevoir un message d'abonnement à un évènement depuis une seconde entité, où l'évènement est associé à un changement dans les informations d'enregistrement d'au moins un de la pluralité d'utilisateurs (101, 113, 121) au niveau de la première entité ; et
des moyens pour envoyer une notification à la seconde entité en réponse au message d'enregistrement, où la notification comprend des informations associées audit au moins un utilisateur (101, 113, 121).

18. Seconde entité pour un système de communication comprenant :
des moyens pour maintenir des informations associées à une pluralité d'utilisateurs (101, 113, 121) ;
**caractérisée par** :
des moyens pour envoyer un message d'enregistrement à un évènement à une première entité, où l'évènement est associé à un changement dans les informations d'enregistrement d'au moins un de la pluralité d'utilisateurs (101, 113, 121) au niveau de la première entité ; et
des moyens pour recevoir une notification provenant de la première entité, où la notification comprend des informations associées audit au moins un utilisateur (101, 113, 121), et ;
dans laquelle lesdites informations sont dépendantes des informations d'enregistrement maintenues au niveau de la première entité.

19. Première entité selon la revendication 17, dans laquelle un ensemble d'évènements est défini, l'ensemble d'évènements étant associé audit évènement.

20. Première entité selon la revendication 19, dans laquelle la première entité est un gestionnaire de noms de domaines Internet.

21. Première entité selon la revendication 20, dans laquelle le changement des informations d'enregistrement concerne des informations de présence.

22. Première entité selon la revendication 21, dans laquelle la seconde entité est un serveur de présence.

23. Première entité selon la revendication 17, dans laquelle le système opère en accord avec un protocole d'initiation de session (SIP).

24. Première entité selon la revendication 23, dans laquelle le message d'abonnement comprend un message SIP SUBSCRIBE, et la notification comprend un message SIP NOTIFY.

25. Seconde entité selon la revendication 18, dans laquelle un ensemble d'évènements est défini, l'ensemble d'évènements étant associé audit évènement.

26. Seconde entité selon la revendication 25, dans laquelle la première entité est un gestionnaire de noms de domaines Internet.

27. Seconde entité selon la revendication 26, dans laquelle le changement des informations d'enregistrement concerne des informations de présence.

28. Seconde entité selon la revendication 27, dans laquelle la seconde entité est un serveur de présence.

29. Seconde entité selon la revendication 18, dans laquelle le système opère en accord avec un protocole d'initiation de session (SIP).

30. Seconde entité selon la revendication 29, dans laquelle le message d'abonnement comprend un message SIP SUBSCRIBE, et la notification comprend un message SIP NOTIFY.

31. Seconde entité selon la revendication 18, dans laquelle une troisième entité envoie un message d'abonnement à la seconde entité pour des informations associées audit au moins un utilisateur.

32. Seconde entité selon la revendication 31, dans laquelle la seconde entité envoie une notification à la troisième entité en réponse à la notification reçue au niveau de la seconde entité, où ladite notification envoyée comprend des informations associées audit au moins un utilisateur.

33. Seconde entité selon la revendication 31, dans laquelle la troisième entité est un serveur d'applications.
